# EUROPÄISCHE PATENTSCHRIFT

(11) **EP 1 772 314 B1**
(45) Veröffentlichungstag und Bekanntmachung des Hinweises auf die Patenterteilung: **19.03.2008**
(21) Anmeldenummer: 05021995.5
(22) Anmeldetag: 08.10.2005
(51) Int. Cl.: B60Q 5/00, B60Q 1/14

(54) **Betätigungsvorrichtung für eine elektrische betriebene Signalanlage**
Actuating device for an electrically-powered signalling device
Dispositif d'actionnement pour un équipement de signalisation à motorisation électrique

(43) Veröffentlichungstag der Anmeldung: 11.04.2007
(73) Patentinhaber: RAFI GmbH & Co. KG, 88276 Berg (DE)
(72) Erfinder: Bieg, Rudolf, 88273 Fronreute (DE)
(74) Vertreter: Engelhardt & Engelhardt

(56) Entgegenhaltungen:
- CA-A1- 2 275 055
- DE-A1- 1 904 622
- US-A- 4 742 192
- US-A- 5 698 828
- US-A1- 2002 079 203
- PATENT ABSTRACTS OF JAPAN Bd. 2003, Nr. 09, 3. September 2003 (2003-09-03) & JP 2003 154913 A (AUTOLIV JAPAN LTD; AUTOLIV IZUMI KK), 27. Mai 2003 (2003-05-27)

## Beschreibung

Die Erfindung bezieht sich auf eine Betätigungsvorrichtung nach dem Oberbegriff des Patentanspruches 1.

Derartige Betätigungsvorrichtungen werden in den verschiedenen Automobilen, insbesondere zur Betätigung der Hupe, im Lenkrad eingebaut. Die elektrische Verbindung zwischen den einzelnen Kontaktschaltern untereinander erfolgt derart, dass etwa im Zentrum des Lenkrades eine ganz oder teilweise umlaufende Leiterplatte, auf die zwei elektrische Leitungen aufgebracht sind, eingebaut ist. Die Leiterplatte ist starr ausgebildet und umschließt teilweise oder vollständig das im Zentrum des Lenkrades angeordnete Airbag-Gehäuse.

Als nachteilig bei diesen bekannten Betätigungsvorrichtungen hat es sich herausgestellt, dass die für den elektrischen Kontakt notwendige Leiterplatte eine Innen- und Außenkontur aufweisen muss, die exakt an die Außenkontur des Airbag-Gehäuses sowie an die Innenkontur des Lenkrades anzupassen ist, denn die Leiterplatte wird im Inneren des Lenkrades zwischen diesem und dem Airbag-Gehäuse eingesetzt.

Dies bedeutet jedoch, dass für jeden Fahrzeugtyp, in denen bekanntlich unterschiedlich ausgestattete Airbaggehäuse sowie Lenkrad-Innenkonturen verwendet werden, andersartige Leiterplatten eingebaut werden müssen. Dies ist jedoch kostenintensiv und umständlich, denn die einzelnen Werkstätten und Autohersteller haben unterschiedlich ausgestaltete Leiterplatten vorrätig zu halten und je nach Fahrzeugtyp diese entsprechend einzubauen.
ausgestaltete Leiterplatten vorrätig zu halten und je nach Fahrzeugtyp diese entsprechend einzubauen.

Des Weiteren ist die Herstellung dieser Leiterplatten äußerst kostenintensiv, denn auf diese sind zunächst die verschiedenen elektrischen Bahnen aufzubringen und anschließend sind gemäß den entsprechenden geometrischen Vorgaben die Konturen der Leiterplatte auszubilden.

Aus der CA 2 275 055 A1 kann eine Betätigungsvorrichtung entnommen werden, die in ein Lenkrad eines Fahrzeuges eingebaut werden kann. Die Betätigungsvorrichtung besteht aus zwei elektrischen Elementen, die zur Erzeugung eines Kurzschlusses aufeinander bewegt werden. Das erste Element ist dabei am Umfang des Lenkrad angebracht und das zweite Schaltelement ist mittels eines Klebeband am Lenkrad fixiert. Das Klebeband ist elastisch, so dass das zweite Element in Richtung des ersten Elementes bewegbar ist.

Als nachteilig bei diesem Stand der Technik hat sich herausgestellt, dass ein Kurzschluss entsteht, sobald der Anpressdruck, mit dem das Lenkrad umgriffen wird, einen bestimmten Grenzwert überschreitet, so dass auch ein unbeabsichtigtes Schaltsignal erzeugt wird. Daher hat sich diese Konstruktion in der Praxis nicht durchsetzen können. Des Weiteren sind die Befestigungsmittel zur Arretierung der beiden Schaltelemente flexibel, so dass die Schaltelemente gegeneinander verrutschen können, wodurch ein seitlicher Abstand zueinander entsteht, der derart groß bemessen sein kann, dass die beiden Schaltelemente nicht mehr miteinander in Kontakt gebracht werden können. Folglich entsteht auch kein Signal, um einen Hupton zu generieren.

Es ist daher Aufgabe der Erfindung, eine Betätigungsvorrichtung der eingangs genannten Gattung derart weiterzubilden, dass die einzelnen Kontaktschalter der Betätigungsvorrichtung individuell in einem Lenkrad eingebaut sind und dass diese Betätigungsvorrichtungen für sämtliche Fahrzeug- und Lenkradtypen verwendet werden können.

Die Aufgabe wird erfindungsgemäß durch die Merkmale des Patentanspruches 1 gelöst.

Um einen konstruktiv einfachen und zweckmäßigen Aufbau des Kontaktschalters zu erreichen, besteht jeder der Kontaktschalter aus zwei Schaltbügeln, die fluchtend übereinander im Kontaktschalter angeordnet sind, so dass einer der Schaltbügel durch das Betätigungselement in Richtung des anderen Schaltbügels zur Erzeugung eines Schaltkontaktes bewegbar ist.

Dadurch, dass der Hub des Betätigungselementes in Richtung auf die beiden Schaltbügel größer bemessen ist als der Abstand zwischen den beiden Schaltbügeln ist... gewährleistet, dass ein elektrischer Kontakt zwischen den beiden Schaltbügeln, durch die Bewegung des Betätigungselementes zuverlässig erzielbar ist.

Weitere vorteilhafte Weiterbildungen der Erfindung ergeben sich aus den Unteransprüchen.

Die elektrische Verbindung mittels einer biegsamen Leitung zwischen den einzelnen Kontaktschaltern ermöglicht eine individuelle an jeden Lenkradtyp angepasste Fixierung der Kontaktschalter im Inneren des Lenkrades. Demnach kann die erfindungsgemäße Betätigungsvorrichtung in jedem Lenkrad untergebracht werden, denn die Verbindung der einzelnen Kontaktschalter miteinander erfolgt durch eine elektrische Leitung und diese ist ganz oder bereichsweise biegsam ausgebildet, wodurch die Betätigungsvorrichtung an die geometrischen Verhältnisse des Lenkrades und des Airbag-Gehäuses, das im Inneren des Lenkrades oftmals angeordnet ist, angepasst werden kann.

Somit ist es nicht mehr erforderlich, jedem Lenkradtyp eine bestimmte geometrisch ausgebildete Leiterplatte zuzuordnen und diese auf Lager zu halten oder gegebenenfalls zu bestellen. Vielmehr kann die erfindungsgemäße Betätigungsvorrichtung, und zwar auch nachträglich, in das Lenkrad eingebaut und mit dem elektrisch betriebenen Signalelement, beispielsweise einer Fahrzeughupe, verbunden werden. Somit können die einzelnen Kontaktschalter der Betätigungsvorrichtung in einem modulartigen Aufbau zusammengeschaltet und an jeweils unterschiedliche Positionen im Lenkrad fixiert werden.

In der Zeichnung ist ein erfindungsgemäßes Ausführungsbeispiel dargestellt, das nachfolgend näher erläutert wird. Im einzelnen zeigt:
- Figur 1: eine in einem Lenkrad eines Fahrzeuges eingebaute Betätigungs-vorrichtung, durch die eine elektrisch betriebene Signalanlage aktivierbar ist, in Draufsicht,
- Figur 2: die Betätigungsvorrichtung gemäß Figur 1 im eingebauten Zustand entlang der Schnittlinie II-II,
- Figur 3: einen der Kontaktschalter der Betätigungsvorrichtung gemäß Figur 1, in Explosionsdarstellung und
- Figur 4: den Kontaktschalter gemäß Figur 3 im zusammengebauten Zustand, in perspektivischer Ansicht.

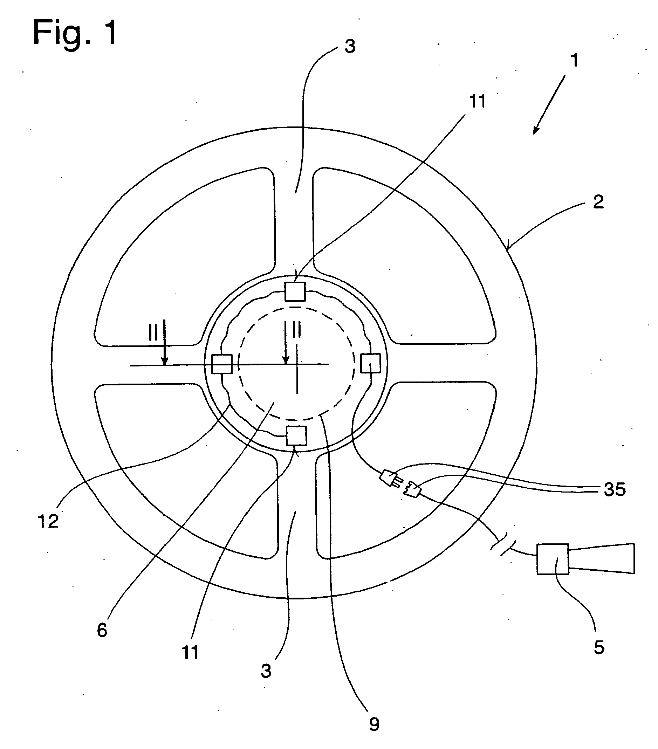

In Figur 1 ist eine Betätigungsvorrichtung 1 dargestellt, durch die eine in einem Fahrzeug eingebaute elektrisch betriebene Signalanlage, insbesondere eine Hupe 5, aktiviert werden soll. Üblicherweise wird die Hupe 5 durch Herunterdrücken eines Betätigungselementes 6, das in einem Lenkrad 2 des Fahrzeuges angeordnet ist, aktiviert. Des Weiteren sind im Zentrum des Lenkrades 2 ein schematisch dargestelltes Airbag-Gehäuse 9 eingebaut, das bei einem Frontalaufprall des Fahrzeuges die Insassen, insbesondere den Fahrer, vor dem Aufprall auf das Lenkrad 2 schützen sollen.

Die Betätigungsvorrichtung 1 und deren nachfolgend näher beschriebenen Bauteile sind demnach zwischen der Außenkontur des Airbag-Gehäuses 9 und der Innenkontur des Lenkrades 2 eingebaut. Somit ist die Funktionsweise des Airbags gewährleistet und gleichzeitig kann durch Herunterdrücken des als Betätigungselement dienenden Deckels 6 des Lenkrades 2 die Hupe 5 betätigt werden. Die Betätigungsvorrichtung 1 besteht aus vier Kontaktschaltern 11, die im Bereich der vier Speichen 3 des Lenkrades 2 in Haltebohrungen 4 eingesteckt sind und daher positionsgenau im Lenkrad 2 untergebracht sind.

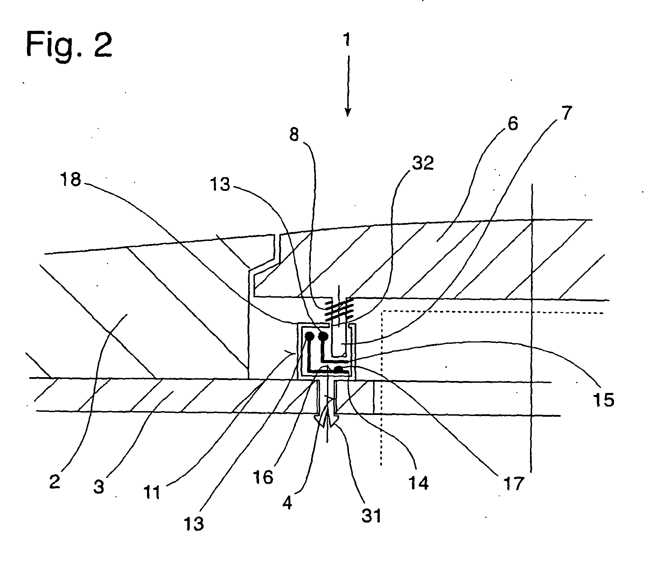

Aus Figur 2 ist ersichtlich, dass an der Innenseite des Deckels 6 ein Zapfen 7 angeformt ist, der in Richtung auf den jeweiligen Kontaktschalter 11 ragt und mit diesem, wie dies nachfolgend noch näher erläutert werden wird, zusammenwirkt. Demnach ist jedem der vier Kontaktschalter 11 am Deckel 6 ein Zapfen 7 zugeordnet.

An jedem Kontaktschalter 11 ist ein Stift 31 angeformt, der in die jeweilige Haltebohrung 4, die im Lenkrad 2 eingearbeitet sind, eingesteckt werden kann, so dass jeder der vier Kontaktschalter 11 am Lenkrad 2 ortsfest fixiert ist. Es versteht sich von selbst, dass eine beliebige Anzahl von Kontaktschaltern 11 im Lenkrad 2 eingebaut werden können. Es ist auch denkbar, dass in dem Lenkrad 2 einzelne Schaltplatten integriert sind, durch die jeweils einer der Kontaktschalter 11 zur Betätigung der Hupe 5 vorgesehen ist.

Der Deckel 6 wird durch die Kraft einer Feder 8 in seiner Ausgangslage gehalten und durch diese, nachdem der Deckel 6 in Richtung der Kontaktschalter 11 gedrückt wurde, wieder zurückgeschoben. Der Deckel 6 ist demnach im Lenkrad 2 geführt gehalten. Der Hub, der von dem Deckel 6 in Richtung auf die Kontaktschalter 11 zurückgelegt werden kann, ist dabei größer bemessen, als der im Kontaktschalter 11 vorgesehene Schaltabstand.

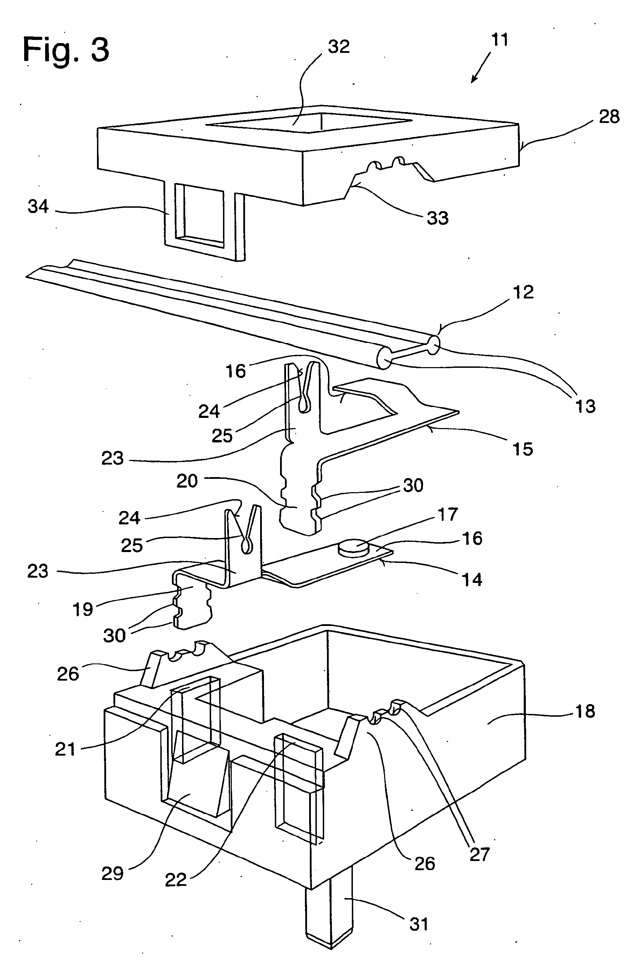

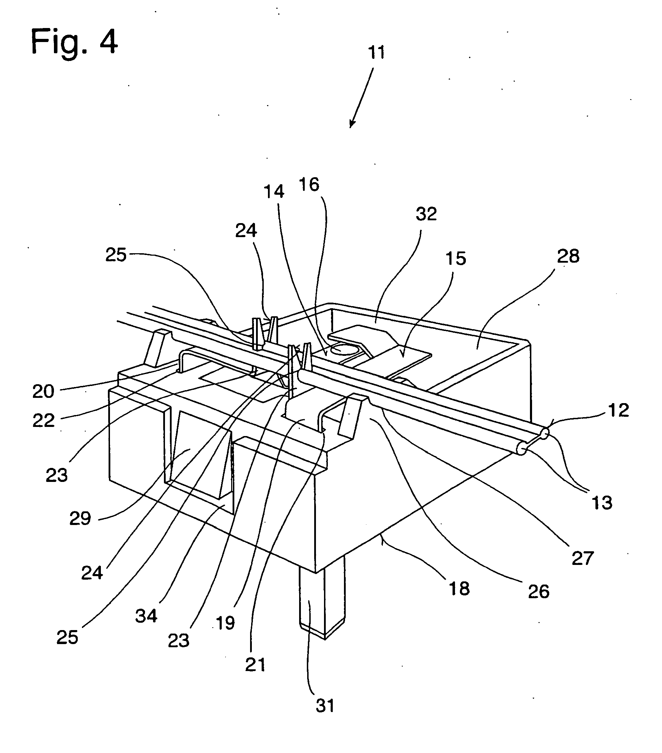

Insbesondere den Figuren 3 und 4 kann entnommen werden, dass der Kontaktschalter 11 aus zwei Schaltbügeln 14 und 15 gebildet ist, die in einem Gehäuse 18 des Kontaktschalters 11 arretiert sind. Die beiden Schaltbügel 14 und 15 bilden eine gemeinsame Kontaktfläche 16, die dadurch entsteht, dass der dem Zapfen 7 des Deckels 6 am nächst gelegene Schaltbügel 15 durch diesen in Richtung auf den Schaltbügel 14 bewegt wird. Der Abstand zwischen den beiden Schaltbügeln 14 und 15 gibt somit den Schaltabstand vor.

Zur exakten Definition des Kontaktes ist auf die dem Schaltbügel 15 zugewandte Oberfläche des Schaltbügels 14 ein Vorsprung 17 aufgebracht, so dass der Schaltabstand der Schaltbügel 14 und 15 dem Abstand zwischen der Oberfläche des Schaltbügels 15, die in Richtung des Schaltbügels 14 weist, und der Oberfläche des Vorsprunges 17 entspricht.

Der Vorsprung 17 kann als dom- oder kuppelförmige Kontaktprägung oder als Schweißpunkt ausgebildet sein. Der Vorsprung 17 kann aus einem zu den Schaltbügeln 14 und 15 unterschiedlichem Material bestehen, beispielsweise aus Gold oder Silber, um den Kontakt zu verbessern. Solche Vorsprünge 17 können aufgeklebt oder angeschweißt sein. Es ist auch denkbar, den Vorsprung 17 als Federstift auszugestalten, durch den der Schaltkontakt gedämpft wird.

In dem Gehäuse 18 sind zwei Aufnahmekammern 21 und 22 eingearbeitet, in die jeweils einer der Schaltbügel 14 bzw. 15 einsteckbar ist. Um eine ausreichende und zuverlässige Fixierung der Schaltbügel 14 und 15 in den Aufnahmekammern 21 oder 22 zu ermöglichen, sind an den beiden Schaltbügel 14 und 15 jeweils ein Befestigungssockel 19 bzw. 20 angeformt. An den beiden Seitenwänden der Befestigungssockel 19 und 20 sind zwei Rastnasen 29 angearbeitet, die im Inneren der jeweiligen Aufnahmekammer 21 bzw. 22 nach Art einer Hinterschneidung gehalten werden, wodurch gewährleistet ist, dass jeder der beiden Schaltbügel 14 und 15 ortsfest im Gehäuse 18 abgestützt wird.

Die Befestigungssockel 19 und 20 weisen demnach in Richtung des Gehäuses 18 und stehen folglich senkrecht von der jeweiligen Kontaktfläche 16 der Schaltbügel 14 und 15 ab.

Zur elektrischen Verbindung der Schaltbügel 14 und 15 sind an diese jeweils ein Steg 23 angearbeitet, der von dem Gehäuse 18 absteht und somit aus diesem herausragt. In den jeweiligen Steg 23 ist eine Aufnahmeöffnung 24 eingearbeitet, in deren Inneren eine Schneidkante 25 vorgesehen ist. In die jeweilige Aufnahmeöffnung 24 wird nämlich zur elektrischen Verbindung der einzelnen Kontaktschalter 11 untereinander eine elektrische Leitung 12, die aus zwei voneinander isolierten Adern 13 gebildet wird, eingesteckt. Jede der Adern 13 verläuft demnach in einer der Aufnahmeöffnungen 24 und wird durch die dort nach Innen ragende Schneidkante 25 beim Einstecken aufgeschlitzt, so dass die Isolation der jeweiligen Ader 13 entfernt wird, wodurch ein elektrischer Kontakt zwischen den aus einem elektrisch leitfähigen Material gebildeten Schaltbügeln 14 und 15 und der jeweiligen Ader 13 der elektrischen Leitung 12 hergestellt ist.

Insbesondere aus Figur 1 kann entnommen werden, dass die elektrische Leitung 12 biegsam ausgebildet ist, so dass diese die Konturen, die durch das Lenkrad 2 und das Airbag-Gehäuse 9 vorgegeben sind, nachbilden kann. Eine exakte Anpassung der geometrischen Verhältnisse im Inneren des Lenkrades 2, also zwischen diesem und dem Airbag-Gehäuse 9 durch die elektrische Leitung 12 ist demnach nicht erforderlich, denn die elektrische Leitung 12 kann ohne weiteres an die vorgegebenen und vorherrschenden geometrischen Verhältnisse angepasst werden. Werkseitig kann für jedes Lenkrad 2 eine Schaltkette vorgefertigt werden. Die einzelnen Kontaktschalter 11 werden in einem vorgegebenen Abstand zueinander an die Leitung 12 angeschlossen.

Um nunmehr die elektrischen Leitungen 12 positionsgenau im Bereich des jeweiligen Kontaktschalters 11 zu fixieren, wird auf das Gehäuse 18 der Kontaktschalter 11 ein Deckel 28 aufgeklipst. An zwei gegenüberliegenden Seitenwänden des Gehäuses 18 sind zu diesem Zweck zwei Rastnasen 30 angeformt, durch die ein am Deckel 28 angebrachter Haltebügel 34 im aufgeklipsten Zustand arretiert wird.

Des Weiteren sind an dem Gehäuse 18 zwei Stützwände 26 vorgesehen, die zueinander parallel und fluchtend verlaufen. In die Oberseite der Stützwände 26 sind jeweils zwei Kerben 27 eingeformt, deren Innenkontur an die Außenkontur der elektrischen Leitung 12 angepasst ist, so dass die elektrische Leitung 12, und zwar insbesondere deren Adern 13, in den Kerben 27 verlaufen. In dem Deckel 28 sind zwei gegenüberliegende parallel zueinander ausgerichtete Aussparungen 33 eingearbeitet, die im zusammengebauten Zustand mit der Position der Stützwände 26 korrespondieren, so dass durch die Aussparung 33 die elektrische Leitung 12 in den Kerben 27-fixiert sind.

Des Weiteren ist in dem Deckel 28 eine Freisparung 32 vorhanden, durch die der Zapfen 7 des Deckels 6 hindurchgreift, wenn dieser in Richtung auf die Kontaktschalter 11 bewegt wird.
Die beiden Schaltbügel 14 und 15 befinden sich unterhalb der Freisparung 32, so dass der Zapfen 7 beim Durchgreifen der Freisparung 32 unmittelbar auf den Schaltbügel 15 auftrifft und diesen in Richtung des Schaltbügels 14 bewegt, so dass zwischen dem Schaltbügel 15 und dem Vorsprung 17 des Schaltbügels 14 eine elektrische Verbindung erzeugt wird, die durch die beiden Adern 13 der elektrischen Leitung 12 an die Hupe 5 zu deren Aktivierung weitergegeben wird.

Die Schaltbügel 14 und 15 sind aus einem hochbiegeelastischen und elektrisch leitfähigen Material, vorzugsweise aus Bronze oder Messing, hergestellt, so dass diese in ihre Ursprungslage zurückfedern, wenn der Zapfen 7 nicht mehr auf diese einwirkt. Aufgrund der gewählten Materialien ermüden die Schaltbügel 14 und 15 nicht und können eine hohe Anzahl von Betätigungsvorgängen aufnehmen.

Aus Figur 4 wird ersichtlich, dass der Deckel 28 die in der Figur 3 gezeigte Aussparung 33 nicht aufweist, sondern vielmehr im Bereich der Stützwände 26 des Gehäuses 18 ausgespart ist, so dass die elektrische Leitung 12 ausschließlich in den Kerben 27 verläuft und nicht in diese eingepresst wird.

Die elektrische Leitung 12 mündet in eine Steckverbindung 35, durch die die elektrische Verbindung zwischen den Kontaktschaltern 11 und der Hupe 5 hergestellt ist.

Der Deckel 28 wird auf das Gehäuse 18 aufgeklipst und durch zwei Nasen 29 gehalten, die vor der Außenwand des Gehäuses 18 abstehen. An den Deckel 28 sind zwei Haltebügel 34 vorgesehen, die über die Nasen 29 gedrückt werden und durch diese fixiert sind.

## Patentansprüche

1. Betätigungsvorrichtung (1) für eine elektrisch betriebene Signalanlage (5), insbesondere einer Hupe, die in einem Fahrzeug eingebaut ist, bestehend aus mindestens zwei Kontaktschaltern (11), die in dem Lenkrad (2) des Fahrzeuges angeordnet und die mit der Signalanlage (5) elektrisch verbunden sind, und aus mindestens einem im Lenkrad (2) abgestützten Betätigungselement (6), das mit mindestens einem der Kontaktschalter (11) zur Erzeugung eines Signals zusammenwirkt und mit einer die Kontaktschalter (11) elektrisch miteinander verbindenden Leitung (12),
**dadurch gekennzeichnet,**
**dass** die Leitung zwei voneinander getrennte Adern (13) aufweist, dass die Leitung (12) ganz oder bereichsweise biegsam ausgebildet und im Lenkrad integriert ist, **dass** jeder der Kontaktschalter (11) aus zwei Schaltbügeln (14, 15) besteht, die fluchtend übereinander im Kontaktschalter angeordnet sind, dass einer der Schaltbügel (15) durch das Betätigungselement (6) in Richtung des anderen Schaltbügels (14) zur Erzeugung eines Schaltkontaktes bewegbar ist, dass die Schaltbügel (14, 15) einen senkrecht abstehenden Steg (23) aufweisen, dass in den Steg (23) jeweils eine Aufnahmeöffnung (24) eingearbeitet ist, in die eine der Adern (13) der Leitung (12) einsteckbar ist, und dass in der Aufnahmeöffnung (24) mindestens eine Schneidkante (25) vorgesehen ist, durch die die Isolation der jeweiligen Ader (13) der Leitung (12) aufschlitzbar ist.

2. Betätigungsvorrichtung nach Anspruch 1,
**dadurch gekennzeichnet,**
**dass** der Hub des Betätigungselementes (6) in Richtung auf die beiden Schaltbügel (14, 15) größer bemessen ist als der Abstand zwischen den beiden Schaltbügeln (14, 15).

3. Betätigungsvorrichtung nach Anspruch 1 oder 2,
**dadurch gekennzeichnet,**
**dass** jeder der beiden Schaltbügel (14, 15) an jeweils einer der Adern (13) der Leitung (12) angeschlossen ist.

4. Betätigungsvorrichtung nach Anspruch 1,
**dadurch gekennzeichnet,**
**dass** die Aufnahmeöffnungen (24) des Steges (23) derart benachbart zueinander angeordnet sind, dass die beiden Adern (13) der Leitung (12) parallel zueinander verlaufen.

5. Betätigungsvorrichtung nach einem oder mehreren
der vorgenannten Ansprüche,
**dadurch gekennzeichnet,**
**dass** die Schaltbügel (14, 15) im betätigten Zustand miteinander eine Kontaktfläche (16) bilden und dass im Bereich der Kontaktfläche (16) an einem oder an beiden der Schaltbügel (14, 15) ein Vorsprung (17) angeformt ist, die in Richtung des jeweils anderen Schaltbügels (14, 15) ragen.

6. Betätigungsvorrichtung nach Anspruch 5,
**dadurch gekennzeichnet,**
**dass** der Vorsprung (17) auf den jeweiligen Schaltbügel (14, 15) aufgeprägt, aufgeklebt oder aufgeschweißt ist.

7. Betätigungsvorrichtung nach Anspruch 5 oder 6,
**dadurch gekennzeichnet,**
**dass** der Vorsprung (17) als Silber-, Gold- oder Blechkontakt ausgebildet ist.

8. Betätigungsvorrichtung nach einem oder mehreren
der vorgenannten Ansprüche,
**dadurch gekennzeichnet,**
**dass** die beiden Schaltbügel (14, 15) aus einem Material hergestellt sind, das eine hohe Biegeelastizität aufweist, vorzugsweise aus Messing oder Bronze und der elektrisch leitfähig ist.

9. Betätigungsvorrichtung nach einem oder mehreren
der vorgenannten Ansprüche,
**dadurch gekennzeichnet,**
**dass** der Kontaktschalter (11) aus einem Gehäuse (18) besteht, in das zwei schlitzartige Aufnahmekammern (21, 22) eingearbeitet sind und dass jeweils einer der Schaltbügel (14, 15) einen Befestigungssockel (19, 20) aufweist, der in eine der Aufnahmekammern (21, 22) einsteckbar und in dieser ortsfest abgestützt ist.

10. Betätigungsvorrichtung nach Anspruch 9,
**dadurch gekennzeichnet,**
**dass** der jeweilige Befestigungssockel (19, 20) eine geriffelt ausgebildete Oberfläche aufweist und/oder dass an dem jeweiligen Befestigungssockel (19, 20) eine oder mehrere Rastnasen (30) angeformt sind, die in den Aufnahmekammern (21, 22) nach Art einer Hinterschneidung gehalten sind.

11. Betätigungsvorrichtung nach Anspruch 9,
**dadurch gekennzeichnet,**
**dass** an zwei gegenüberliegenden Seitenwänden des Gehäuses (18) jeweils eine Stützwand (26) angeformt ist, in deren vom Gehäuse (2) abstehenden Oberfläche zwei Kerben (27) eingeformt sind, in denen jeweils eine der Adern (13) der Leitung (12) verlaufen und gehalten ist.

12. Betätigungsvorrichtung nach Anspruch 9,
**dadurch gekennzeichnet,**
**dass** das Gehäuse (18) mittels eines Deckels (28) verschließbar ist,
**dass** in dem Deckel (28) eine Freisparung (32) eingearbeitet ist und
**dass** die Schaltbügel (14, 15) fluchtend unterhalb der Freisparung (32) verlaufen.

13. Betätigungsvorrichtung nach Anspruch 12,
**dadurch gekennzeichnet,**
**dass** das Betätigungselement (6) als Deckel oder als Schaltplatte, die im Lenkrad (2) integriert ist, ausgebildet ist, an deren dem jeweiligen Kontaktschalter (11) zugewandten Stirnfläche ein Zapfen (7) angeformt ist und dass der Zapfen (7) im betätigten Zustand die Freisparung (32) des Deckels (28) durchgreift und durch den die beiden Schaltbügel (14, 15) zur Erzeugung eines elektrischen Kontaktes in das Innere des Gehäuses (18) bewegbar sind.

14. Betätigungsvorrichtung nach Anspruch 12,
**dadurch gekennzeichnet,**
**dass** der Deckel (28) auf das Gehäuse (18) aufgeklipst ist.

15. Betätigungsvorrichtung nach Anspruch 9,
**dadurch gekennzeichnet,**
**dass** an dem Gehäuse (18) ein oder mehrere Haltestifte (31) angeformt ist bzw. sind und dass in dem Lenkrad (2), vorzugsweise im Bereich der Speichen (3) des Lenkrades (2), eine oder mehrere Bohrungen (4) eingearbeitet ist bzw. sind, in denen jeweils einer der Haltestift (31) des Gehäuses (18) einsteckbar ist.

16. Betätigungsvorrichtung nach einem oder mehreren
der vorgenannten Ansprüche,
**dadurch gekennzeichnet,**
**dass** die Kontaktschalter (11) zusammen mit der Leitung (12) eine vorgefertigte Kette bilden, dass der zwischen zwei benachbarte Kontaktschalter (11) vorgesehene Abstand an die Einbaugegebenheiten des Lenkrades (2) angepasst ist.

## Claims

1. An actuating device (1) for an electrically-powered signalling device (5), in particular a horn installed in a vehicle, comprising at least two contact switches (11) arranged in the steering wheel (2) of the vehicle and connected to the signalling device (5), and comprising at least one actuating element (6) supported in the steering wheel (2) that interacts with at least one of the contact switches (11) for generating a signal and with a cable (12) that connects the contact switches (11) together electrically,
**characterized in that**,
the cable has two separate conductors (13), that the cable (12) is entirely flexible or flexible in parts and is integrated in the steering wheel, that each of the contact switches (11) consists of two terminal links (14, 15) arranged flush one above the other in the contact switch, that one of the terminal links (15) can be moved by the actuating element (6) towards the other terminal link (14) for establishing the switching contact, that the terminal links (14, 15) have a vertically projecting web (23), that an accommodation opening (24) is worked into each web (23) into which accommodation opening (24) one of the conductors (13) of the cable (12) can be inserted, and that there is at least one cutting edge (25) in the accommodation opening (24) by means of which the insulation of the particular conductor (13) of the cable (12) can be cut open.

2. The actuating device in accordance with Claim 1,
**characterized in that**,
the stroke of the actuating element (6) in the direction of the two terminal links (14, 15) is longer than the distance between the two terminal links (14, 15).

3. The actuating device in accordance with Claim 1 or 2,
**characterized in that**,
each of the two terminal links (14, 15) is connected to one conductor (13) each of the cable (12).

4. The actuating device in accordance with one of Claim 1,
**characterized in that**,
the accommodation openings (24) in the web (23) are arranged next to one another so that the two conductors (13) of the cable (12) run in parallel to one another.

5. The actuating device in accordance with one or more of the aforementioned claims,
**characterized in that**,
the terminal links (14, 15) form a contact surface (16) when actuated and that a projection (17) is formed in the area of the contact surface (16) on one or both of the terminal links (14, 15) and this projection (17) points in the direction of the other terminal link (14, 15) in each case.

6. The actuating device in accordance with Claim 5,
**characterized in that**,
the projection (17) is embossed, glued or welded onto the particular terminal link (14, 15).

7. The actuating device in accordance with Claim 5 or 6,
**characterized in that**,
the projection (17) is configured as a silver, gold or sheet metal contact.

8. The actuating device in accordance with one or more of the aforementioned claims,
**characterized in that**,
the two terminal links (14, 15) are manufactured from a material that has a high level of flexural elasticity, preferably from brass or bronze and is electrically conductive.

9. The actuating device in accordance with one or more of the aforementioned claims,
**characterized in that**,
the contact switch (11) consists of a housing (18) into which two slot-shaped accommodation chambers (21, 22) are worked and that each of the terminal links (14, 15) has a fastening base (19, 20) that can be inserted into one of the accommodation chambers (21, 22) and is supported in this in a fixed location.

10. The actuating device in accordance with Claim 9,
**characterized in that**,
that the particular fastening base (19, 20) has a fluted surface and/or one or more projection lugs (30) are formed onto the particular fastening base (19, 20), these being held in place in the accommodation chambers (21, 22) in the same manner as an undercut.

11. The actuating device in accordance with Claim 9,
**characterized in that**,
a support wall (26) is formed onto each of two opposite side walls of the housing (18), with two notches (27) formed into the surface of the support wall (26) projecting from the housing (2), and in each of which notches (27) one of the conductors (13) of the cable (12) runs and is held.

12. The actuating device in accordance with Claim 9,
**characterized in that**,
the housing (18) can be closed by means of a cover (28), that a recess (32) is worked into the cover (28) and that the terminal links (14, 15) run flush under the recess (32).

13. The actuating device in accordance with Claim 12,
**characterized in that**,
the actuating element (6) is configured as a cover or as a switch plate integrated in the steering wheel (2) with its end face pointing towards the particular contact switch (11) having a peg (7) formed onto it, and that the peg (7) passes through the recess (32) in the cover (28) in the actuated position and through which recess (32) the two terminal links (14, 15) for generating an electrical contact can be moved into the inside of the housing (18).

14. The actuating device in accordance with Claim 12,
**characterized in that**,
the cover (28) is clipped onto the housing (18).

15. The actuating device in accordance with Claim 9,
**characterized in that**,
one or more holding pins (31) is or are formed onto the housing (18) and that one or more holes (4) is or are worked into the steering wheel (2) preferably in the area of the spokes (3) of the steering wheel (2), into each of which holes (4) one of the holding pins (31) of the housing (18) can be inserted.

16. The actuating device in accordance with one or more of the aforementioned claims,
**characterized in that**,
the contact switches (11) together with the cable (12) form a prefabricated chain and that the distance provided between two adjacent contact switches (11) is adapted to the installation conditions of the steering wheel (2).

## Revendications

1. Dispositif d'actionnement (1) pour un équipement de signalisation à motorisation électrique (5), en particulier d'un klaxon monté dans un véhicule, comprenant au moins deux commutateurs de contact (11) disposés dans le volant (2) du véhicule et liés électriquement à l'équipement de signalisation (5), au moins un élément d'actionnement (6) appuyé dans le volant (2) et collaborant avec au moins un commutateur de contact (11) pour la génération d'un signal, et finalement une ligne électrique pour la connexion des commutateurs de contact (11) entre eux,
**caractérisé en ce que**
la ligne comprend deux conducteurs séparés (13), que la ligne (12) est entièrement ou partiellement flexible et intégrée dans le volant, que chacun des commutateurs de contact (11) consiste de deux étriers de commutation (14, 15) disposés à fleur un au-dessus de l'autre dans le commutateur de contact, qu'un des étriers de commutation (15) se laisse déplacer par l'élément d'actionnement (6) en direction de l'autre étrier de commutation (14) en vue de la génération d'un contact de commutation, que les étriers de commutation (14, 15) possèdent une traverse (23) saillant perpendiculairement, qu'il est prévu dans la traverse (23) respectivement une ouverture (24) pour l'enfichage d'un des conducteurs (13) de la ligne (12), et que dans l'ouverture d'enfichage (24) il est prévu au moins une arête de coupe (25) destinée à décou-per l'isolement du conducteur respectif (13) de la ligne (12).

2. Dispositif d'actionnement d'après la revendication 1,
**caractérisé en ce que**
la course de l'élément d'actionnement (6) en direction des deux étriers de commutation (14, 15) est plus grande que l'écartement entre les deux étriers de commutation (14, 15).

3. Dispositif d'actionnement d'après une des revendications 1 ou 2,
**caractérisé en ce que**
chacun des deux étriers de commutation (14, 15) est branché sur respectivement un des conducteurs (13) de la ligne (12).

4. Dispositif d'actionnement d'après la revendication 1,
**caractérisé en ce que**
les ouvertures d'enfichage voisines (24) de la traverse (23) sont disposées de sorte que les deux conducteurs (13) de la ligne (12) soient orientés en direction parallèle.

5. Dispositif d'actionnement d'après une ou plusieurs des revendications précédentes,
**caractérisé en ce que**
actionnés, les étriers de commutation (14, 15) forment ensemble une surface de contact (16) et que, au niveau de la surface de contact (16), il est formé sur un ou sur les deux étriers de commutation (14, 15) une saillie (17) donnant respectivement en direction de l'autre étrier de commutation (14, 15).

6. Dispositif d'actionnement d'après la revendication 5,
**caractérisé en ce que**
la saillie (17) est gravée, collée ou soudée sur l'étrier de commutation respectif (14, 15).

7. Dispositif d'actionnement d'après une des revendications 5 ou 6,
**caractérisé en ce que**
la saillie (17) est un contact en argent, en or ou en tôle.

8. Dispositif d'actionnement d'après une ou plusieurs des revendications précédentes,
**caractérisé en ce que**
les deux étriers de commutation (14, 15) sont réalisés en métal hautement élastique, de préférence en laiton ou en bronze, et que ce métal assure la conductibilité électrique.

9. Dispositif d'actionnement d'après une ou plusieurs des revendications précédentes,
**caractérisé en ce que**
le commutateur de contact (11) consiste d'un boîtier (18) dans lequel sont pratiquées deux chambres de réception sous la forme de fentes (21, 22) et que respectivement un des étriers de commutation (14, 15) porte un socle de fixation (19, 20) qui se laisse insérer et appuyer fermement dans une des chambres de réception (21, 22).

10. Dispositif d'actionnement d'après la revendication 9,
**caractérisé en ce que**
le socle de fixation respectif (19, 20) porte une surface cannelée et/ou qu'il est formé sur le socle de fixation respectif (19, 20) un ou plusieurs nez de crantage (30) retenus sous la forme d'une contre-dépouille dans les chambres de réception (21, 22).

11. Dispositif d'actionnement d'après la revendication 9,
**caractérisé en ce que**
sur deux parois latérales opposées du boîtier (18), il est formé respectivement une paroi d'appui (26) dont la surface éloignée du boîtier (2) comporte deux entailles (27) dans lesquelles il est posé et retenu respective-ment un des conducteurs (13) de la ligne (12).

12. Dispositif d'actionnement d'après la revendication 9,
**caractérisé en ce que**
le boîtier (18) se laisse fermer par un couvercle (28), que le couvercle (28) comporte une ouverture (32) et que les étriers de commutation (14, 15) se trouvent à fleur en dessous de l'ouverture (32).

13. Dispositif d'actionnement d'après la revendication 12,
**caractérisé en ce que**
l'élément d'actionnement (6) est conçu sous la forme d'un couvercle ou d'une plaque de commande intégrés dans le volant (2) et dont la face donnant sur le commutateur de contact (11) comporte un téton (7), que, à l'actionnement, le téton (7) passe à travers l'ouverture (32) du couvercle (28) et que celui-ci déplace les deux étriers de commutation (14, 15) vers l'intérieur du boîtier (18) afin de réaliser le contact électrique.

14. Dispositif d'actionnement d'après la revendication 12,
**caractérisé en ce que**
le couvercle (28) est fixé par un clip sur le boîtier (18).

15. Dispositif d'actionnement d'après la revendication 9,
**caractérisé en ce que**
sur le boîtier (18), il est formé un ou plusieurs goujons de retenue (31) et que dans le volant (2), de préférence à l'endroit des rayons (3) du volant (2), il est pratiqué un ou plusieurs alésages (4) dans lesquels il est inséré respectivement un des goujons de retenue (31) du boîtier (18).

16. Dispositif d'actionnement d'après une ou plusieurs des revendications précédentes,
**caractérisé en ce que**
les commutateurs de contact (11) forment, ensemble avec la ligne (12), une chaîne préfabriquée et que l'écartement prévu entre deux commutateurs de contact voisins (11) est adapté aux conditions d'implantation dans le volant (2).
